# EUROPEAN PATENT APPLICATION

(11) **EP 2 426 402 A1**
(43) Date of publication of application: **07.03.2012**
(21) Application number: 10174883.8
(22) Date of filing: 01.09.2010
(51) Int. Cl.: F21S 8/00, F21S 11/00, G02B 6/00

(54) **Fibre illumination system**

(71) Applicant: Danmarks Tekniske Universitet - DTU, 2800 Kongens Lyngby (DK); Roskilde Universitet, 4000 Roskilde (DK)
(72) Inventor: Bjarklev, Araceli, 4000 Roskilde (DK); Bjarklev, Anders, 4000 Roskilde (DK)
(74) Representative: Jensen, Peter Kim

(57) **Abstract**

The invention relates to a fibre illumination module and system for the collection and delivery of daylight for illumination purposes. The fibre illumination module comprises a plurality of collector elements, each collector element comprising an input fibre having a first end and a second end, and a collection optics, the collection optics being configured to receive light incident on a distal end of the collection optics, to transfer at least partially the incident light to a proximal end of the collection optics, and to couple at least partially the transferred light from the proximal end of the collection optics into the first end of the input fibre, each collector element having a principal axis for the collection of light defining an optical axis of the collector element. The optical axes of the collector elements are arranged in a radially outward pointing multi-directional arrangement. The fibre illumination system comprises a fibre illumination module of the above-mentioned type. By the invention, daylight may be exploited for the illumination of remote interior spaces of buildings in order to save energy, and improve the well-being of users in both housing and working environments.

## Description

The invention relates to a fibre illumination module for the collection and delivery of daylight for illumination purposes, the fibre illumination module comprising a plurality of collector elements, each collector element comprising an input fibre having a first end and a second end, and a collection optics, the collection optics being configured to receive light incident on a distal end of the collection optics, to transfer at least partially the incident light to a proximal end of the collection optics, and to couple at least partially the transferred light from the proximal end of the collection optics into the first end of the input fibre, each collector element having a principal axis for the collection of light defining an optical axis of the collector element. In a particular aspect, the invention relates to a fibre illumination system comprising a fibre illumination module of the above-mentioned type.

The illumination of spaces in the interior of buildings without direct access to daylight through windows or roof-lights is usually done by electrical lighting and is a source for substantial consumption of energy. Fibre illumination systems have therefore been suggested for guiding daylight into such interior spaces of buildings that are remote from direct access to daylight, thereby reducing the consumption of electrical energy for illumination.

Known fibre illumination systems collect daylight by means of a roof-mount collector for the subsequent distribution of the collected daylight in a building by means of fibre optics in order to illuminate the inside of the building in spaces where windows are not present or at least only provide insufficient illumination. Such systems typically comprise advanced tracking set-ups in order to direct the daylight collector towards the sun and follow the movement of the sun during the day and/or year. Such tracking systems involve moving parts, typically require electric power and control electronics, and are therefore expensive to manufacture, and costly to maintain. Both the primary investment and the cost of ownership of such systems are therefore prohibitive for an economically viable use on a large scale. Furthermore, the environmental gain in terms of energy saved by the use of daylight instead of electrical lighting is somewhat diminished, because of the constant use of electrical power by the tracking system.

In addition, such a tracking set-up either requires to be mounted on a flat-top roof or otherwise can be very dominating for the appearance of a building - if not in direct conflict with the architecture of the building. Such esthetical considerations further contribute to the difficulties in promoting a wide-spread use of such systems for both housing and office buildings.

So-called hybrid illumination systems combine the collection and distribution of daylight by a fibre illumination system with artificial lighting. Such hybrid lighting systems are configured to compensate for the variations of daylight, e.g. by measuring the intensity of light at the point of use and keeping the light intensity constant at a desired intensity level by supplementing the delivered daylight with artificial light. The harvested daylight thus saves energy by supplementing the artificial lighting of the interior spaces.

However, In addition to the economic and environmental aspects of exploiting daylight for illumination of buildings, a further aspect is very important, namely the well-being of users of the buildings. This aspect is not addressed by known systems, but has to be taken into account in order to provide a viable system for wide-spread use.

Long-term exposure to artificial lighting is unpleasant, because human perception is not adapted to the unnatural character of the artificial lighting. In certain legislations, interior rooms without access to daylight are therefore not allowed for certain uses, such as continuous office use.

In this context, a disadvantage not addressed by known fibre illumination systems for the collection of daylight is the spectral distortion of the light delivered to the inside of a building. The spectral distortion results from suppression of certain wavelengths in the light delivered by the fibre illumination system - depending on the spectral transmission characteristics of the optical fibres used. Even though daylight is collected and directly guided to an interior space of the building, the light may therefore be perceived unnatural and unpleasant by a user of the interior space and therefore over time affect the well-being of the user.

The object of the invention is to provide a fibre illumination system that exploits daylight for the illumination of remote interior spaces of buildings in order to save energy, and improve the well-being of users in both housing and working environments. According to a particular aspect of the invention, an improved or alternative fibre illumination system is provided overcoming at least some of the above-mentioned disadvantages that impede a wide-spread use of fibre-illumination systems. Further according to a particular aspect of the invention, an improved or alternative fibre illumination system comprises an improved fibre illumination module for the collection and delivery of daylight to the interior of a building that is both affordable to produce and reliable in operation, i.e. a fibre illumination module that is cost-effective both in terms of the initial investment and the cost of ownership.

This is achieved by a fibre illumination module of the above-mentioned type, wherein the optical axes of the collector elements are arranged in an outward pointing multi-directional arrangement.

As mentioned above, the optical axis of each of the collector elements is defined as the principal axis for the collection of light for that collector element. The principal axis of collection of light is understood as the direction/axis where the angle dependent collection efficiency is a maximum. The angle dependent collection efficiency of a collector element is determined as the ratio of the light power output at the second end of the input fibre to the light power falling onto the entry (front lens) aperture of the collection optics from a given direction/angle of incidence.

The term "multi-directional" refers to covering at least a first angular range in a first angular direction and optionally/preferably also a second angular range in a second angular direction.

Angles are defined with respect to a Cartesian coordinate system, wherein the XY-plane is equal to the reference plane of the fibre illumination module, and the Z-direction pointing away from the fibre illumination module in an outward direction is equal to the orientation of the module and defines the reference direction for determining the angle of incidence of light. In the Cartesian notation, the first angular direction refers to angles measured in a plane parallel to the ZX-plane, and the second angular direction refers to angles measured in a plane parallel to the ZY-plane.

It is noted that for certain embodiments of the fibre illumination module, it may be preferable to refer to other coordinate systems like a spherical coordinate system. In spherical coordinates, the equatorial plane is advantageously defined in the reference plane of the fibre illumination module. The polar direction is equal to the orientation of the fibre illumination module and defines the reference direction for determining the angle of incidence of light. In the spherical notation, the first and second angular directions may be identified as the polar angle and the azimuth angle, respectively.

In the following, mainly for reasons of clarity, the description adheres to a single notation, namely the above defined Cartesian notation.

In practice, the reference plane of the fibre illumination module may be chosen to be any well-defined plane of the fibre illumination system, such as a plane defined by the back side of a module-housing, a plane defined by a mounting bracket, or the front-side of a flat/planar module. The orientation is the direction perpendicular to the reference plane and defines the reference direction for determining the angle of incidence of light.

The terms "distal" and "proximal" are defined with respect to the input fibre. The distal end of the collection optics thus refers to the outer surface/end of the collection optics pointing away from the input fibre, and the proximal end of the collection optics thus refers to the end of the collection optics pointing towards the first end of the input fibre.

The term "outward" refers to a distal direction, i.e. a direction having a component pointing from the first end of the input fibre towards the distal end of the collection optics.

The term "inward" refers to a proximal direction opposite to a distal direction, i.e. a direction having a component pointing from the distal end of the collection optics to the first end of the input fibre.

The multidirectional arrangement of the collector elements has the advantage that the collection of daylight by the module may be improved by taking into account the varying angles of incidence of light onto a fixedly installed module, said variations taking place during the day, during the year, and/or because of diffuse light conditions, such as in cloudy weather.

The angular spread of the multidirectional arrangement of optical axes may be adapted according to the local conditions where the module is to be installed. For example, for a location with a lot of cloudy days, the angular spread of the optical axes may be selected to be large in both the first and the second angular direction in order to improve collection of light under diffuse conditions. In a region with a lot of direct sunlight, on the other hand, the angular range may be strictly limited to the variation of the movement of the sun during the day and/or during the year.

Furthermore, the angular distribution of the optical axes of the collector elements, i.e. the number of optical axes pointing within a given sub-range of angles, may be adjusted according to an expected general demand profile. For example, the angular range covered by modules intended for an office building may be selected so as to mainly collect sun-light during office hours, whereas the demand profile for a residential building may require an angular distribution so as to mainly collect light in the morning and afternoon/evening hours.

Furthermore, the angular range and distribution may be adapted to the orientation of the module when installed taking into account the latitude and longitude of the geographic location and the expected hours of direct sun-light.

By the above measures, the selection of the angular range and distribution of the multi-directional arrangement of optical axes is adapted to a predetermined demand profile. Thereby, the foot-print of a given daylight/hybrid illumination system installation is optimised according to the predetermined demand profile.

A multi-directional fibre illumination module according to the invention may also advantageously be used in shipbuilding for the illumination of interior spaces inside the hull of the ship that do not have direct access to daylight. Advantageously the angular range covered by the optical axes of such a multi-directional fibre illumination module may be selected according to the placement/orientation of the module on the hull, and will typically cover a large range of angles of incidence, since the orientation of the installed fibre-illumination system will not be fixed with respect to a geographic location/orientation.

Further according to one embodiment of the fibre illumination module, the collection optics comprises a front lens at the distal end, and a coupling optics at the proximal end, the coupling optics being spaced apart from the front lens by means of a spacer structure.

The collection optics receives light through the front lens at the distal end. The incoming light is passed through the front lens to the coupling optics. At the proximal end of the collection optics, the coupling optics is coupled to the first end of the input fibre so as to couple transmitted light into the input fibre by means of the coupling optics.

Further according to a preferred embodiment of the fibre illumination module, the front lens is a Fresnel-lens having a flat/smooth first surface and a profiled second surface, wherein the flat/smooth first surface of the Fresnel-lens is arranged to face in an outward direction.

Advantageously, the Fresnel-lens may be produced from a sheet/slab material, e.g. by engraving, embossing, injection moulding or the like. The sheet material may be a flexible plastic material of optical quality adapted to withstand exposure to direct sunlight including UV-light, as well as harsh outdoor weather conditions.

Using a Fresnel -lens has the advantage that a high optical power of the lens can be produced from thin sheet or slab material. The Fresnel-lens may in principle be oriented in both directions, or be provided with a Fresnel-type profiling on both sides of the sheet/slab.

However, the front lens defines distal termination of the collector element and is typically located on the roof or outside walls of a building. The outside surface of the front lens is therefore exposed to outdoor contaminations and weather conditions. By providing a Fresnel-lens with an outer flat or at least smooth surface cleaning is facilitated, and fouling of the collector optics due to contaminants/precipitates is avoided, thereby reducing the need for cleaning and maintenance.

Further according to a preferred embodiment of the fibre illumination module, the collector elements are arranged such that the distal ends of the collector elements follow a prescribed surface, said prescribed surface being independent of the direction of the optical axes of the collector elements.

By arranging the distal ends of the collector elements on a prescribed surface, wherein the prescribed surface is independent of the orientation of the optical axes of the collector elements, it is achieved that the outwardly facing surface of the module may be designed according to conditions/constraints of esthetical or practical nature without compromising the improved light collection properties achieved by the multi-directional arrangement. Typically in such a configuration, the optical axis of one or more collector elements intersects the prescribed surface at an angle different from the surface normal to the prescribed surface at the point of intersection, i.e. at least a portion of the collector elements of the module has an optical axis that is inclined with respect to the surface normal by an angle in the range greater than 0 degrees and less than 90 degrees, alternatively between 10 degrees and 80 degrees, or alternatively between 30 degrees and 60 degrees. A minimum angle between the surface normal and the optical axis of the prescribed surface accounts for a minimum of the desired freedom of design, whereas a maximum angle typically accounts for practical difficulties in providing optics for capturing light from large angles of incidence.

Light is received by the collector elements through the distal end. Under operation, the distal ends of the arrangement of collector elements thus define the light receiving surface of the fibre illumination module. This implies that the prescribed surface is configured to receive light. The term "light receiving surface" is to be understood as a surface configured for receiving light when the fibre illumination module/system is operated. Defining the light receiving surface to be independent of the optical axes of the collector elements typically means that the optical axes of different collector elements intersect the outer surface of their respective distal end at different angles, at least for some of the collector elements of a given fibre illumination module. The range of different angles will depend on the prescribed surface in combination with the angular spread of the multi-directional arrangement of optical axes of the collector elements, and will be constraint to angles that allow for the collection of light.

In order to maintain the multi-directional character of the light collection by the fibre-illumination module for a more or less arbitrarily shaped light receiving surface, a different optical design is required for different collector elements of the same fibre illumination module. However, a considerably improved collection of light may be achieved throughout the day, throughout the year, and in particular under diffuse light conditions, such as cloudy weather, yet without the need for an active tracking device and within conditions defined by esthetical or practical constraints.

Advantageously according to some embodiments, the difference in optical design may be implemented in a different front lens for each of the different collector elements, while keeping the optical design for the coupling of light into the input fibre essentially the same for all collector elements of a given fibre illumination module. Thereby, production cost is reduced.

Collector elements can at least partially be merged to form a concise module, e.g. by providing the front lenses of adjacent collector elements as Fresnel-lenses inscribed directly adjacent to each other on a single sheet forming the distal wall of the fibre illumination module, or by sharing a single front lens between a plurality of input fibres, each input fibre being provided with a corresponding coupling optics.

Further according to a preferred embodiment of the fibre illumination module, the prescribed surface has the shape of an arbitrary roof surface. By shaping the outermost surface of the fibre illumination module according to an arbitrary roof surface with access to daylight a large freedom of design is achieved. This improves the possibilities to integrate the module into an arbitrary roof, and thereby to adapt the module for wide-spread use on a large variety of different buildings, in agreement with the architecture, or according to practical issues, such as the accessibility or need for maintenance.

Further according to a preferred embodiment of the fibre illumination module, the prescribed surface is flat. Providing a fibre illumination module with a flat outer surface is particularly advantageous for general purpose use. For instance, the fibre illumination module may be shaped as a collector panel in modules of practical dimensions with respect to retail, sale, and installation. Other advantageous embodiments of a fibre illumination system may be provided in the shape of a roof tile/panel, window, a roof-window, a facade element/tile/panel, may be integrated into a prefabricated wall or roof building block/element for direct integration into the outer shell of the building.

Advantageously, according to one embodiment of the fibre illumination module, the collector elements have a solid angle of acceptance around their respective optical axis where incoming light is collected, wherein the solid angles of acceptance of adjacent collector elements overlap each other.

An acceptance angle of the collector element may be defined as the angle between the principal axis and the direction of incident light for which the collection efficiency drops to a predefined value, essentially to zero. The acceptance angle may vary in an azimuth direction around the principal axis. Depending on the optical configuration of the collector element, the acceptance angle of the collector element may be determined by the numerical aperture of the collection optics or by the acceptance angle/cone of the input fibre

The overlapping arrangement of the collector element acceptance angles has the advantage that the fibre illumination module covers the full solid angle of incidence within the angular range of the multi-directional arrangement. Preferably, the overlap of acceptance solid angles is chosen partially redundant such that one or more collector elements simultaneously collect light from a given direction, but not all collector elements of the fibre illumination module.

Further according to a preferred embodiment of the fibre illumination module, one or more collector elements further comprise photovoltaic cells arranged around the collection optics so as to receive light collected by the collection optics at angles outside the angle allowing for coupling of the light into the input fibre. Thereby, light incident at large angles, but still entering the fibre illumination module through its front side may still be exploited for the production of electric energy.

According to one embodiment the photovoltaic cells are arranged between the front lens and the first end of the input fibre, preferably in a cone around the coupling optics so as to cover the angles exceeding the angle of acceptance of the optical fibre.

According to a further aspect of the invention, a fibre illumination system is provided comprising a fibre illumination module according to any of the abovementioned embodiments.

Further according to one embodiment, the fibre illumination system further comprises artificial light sources, such as light emitting diodes or other solid state light sources. By providing additional artificial light sources, the daylight delivered by the fibre illumination system may be supplemented according to user requirements. The artificial light and the daylight may be combined. Furthermore, artificial lighting and/or daylight may be distributed through the same delivery infrastructure of the fibre illumination system and the delivered light may be diffused at a point of use by means of luminaries associated with the fibre illumination system.

Further according to one embodiment of the fibre illumination system, the artificial light sources are powered by the photovoltaic cells of the fibre illumination module according to the above-mentioned embodiment, preferably via intermediate re-chargeable electrical energy storage means.

By this embodiment energy consumption for powering the artificial lighting is reduced, thereby saving energy. At the limit, the use of externally supplied electrical energy may be reduced to zero, making the system self-contained in terms of energy use.

Advantageously, artificial light sources, control-electronics and batteries may be integrated within the fibre illumination module, thereby providing a particularly modular unit, which in certain configurations may be provided with control signal input for controlling the artificial lighting and/or external power supply, if the artificial light sources are to be used as electric lighting when daylight intensity becomes insufficient for providing a desired minimum illumination.

Further according to a preferred embodiment of the fibre illumination system, the spectral distribution of the artificial light sources is controlled so as to provide a predetermined optical spectrum delivered at the second end of the transport fibre.

The spectral distribution may be controlled by different means, e.g. by combining the light from artificial light sources having different colours and adjusting the relative intensities of these light sources so as to achieve the desired spectral distribution.

Thereby it is possible to compensate for spectral distortion of the daylight delivered by the fibre illumination system, in particular due to absorption in the optical fibres used for distributing the light.

Preferably, the artificial light is controlled to only provide a spectral compensation, whereas the intensity follows that of the outside illumination - at least as long as that intensity is sufficient to provide an intensity that matches the need for illumination on the inside. Thereby, the natural character of the illumination experienced by user is maintained.

Further according to a preferred embodiment of the fibre illumination system, the predetermined spectrum substantially corresponds to the spectrum of the daylight received by the collection optics.

The predetermined spectrum of the daylight may be a representative spectrum taken at the site at installation or maintenance. Active regulation of the artificial lighting may be performed according to a comparison between the representative spectrum and a corresponding signal from a spectral measurement at the point of use. Alternative, the measurement at the point of use may be an intensity measurement and the active regulation with respect to the representative spectrum is done with respect to a predetermined intensity dependence of the spectral distribution at the point of use.

The predetermined spectrum may also be a dynamically acquired reference spectrum according to a sensor input measuring spectral properties of the incoming light. This can be achieved by many different means, e.g. by a simple low-cost spectrometer or by a combination of intensity sensors, the intensity sensors being provided with optical filters of different spectral characteristics. Active regulation of the spectral distribution of the artificial light may be performed according to a comparison between the spectral properties signal obtained from the incoming light and a corresponding signal from a spectral measurement at the point of use.

Further according to a preferred embodiment, the fibre illumination system further comprises a transport fibre having a first end and a second end, and at least one connection unit configured to couple light from a plurality of input fibres into the first end of the transport fibre so as to transmit the light from the first end through the transport fibre to the second end. Thereby the use of optical fibres is reduced and the complexity of the distribution infrastructure of the fibre illumination system is considerably reduced.

Preferably, at least a first connection unit is provided within the fibre illumination module so as to provide a particularly modular collection unit, that is easy to install and easy to interconnect/integrate within a larger fibre illumination system.

Further according to one embodiment of the fibre illumination system, light emitted from the artificial light sources is coupled into the transport fibre at the connection unit, preferably by means of further input fibres.

As mentioned above, it may be advantageous or even required to combine the collected daylight with light from artificial light sources. The connection unit provides an easy access for supplying artificial light to the distribution infrastructure of the fibre illumination system centrally and remote from a given point of use. This is useful e.g. when the point of use is a wet-room, swimming pool, or an aggressive/hazardous environment that put severe restrictions to electrical installations.

Preferably, in order to improve modularity of the system, photovoltaic cells, the artificial light sources, optional control electronics and a connection unit are provided within the same fibre illumination module.

Further according to one embodiment of the fibre illumination system, the connection unit is a fused fibre coupler. This is a particularly simple configuration that may be produced at relatively low cost.

Advantageously according to one embodiment, the fibre illumination system further comprises cooling means, such as a heat sink or a heat exchanger. Thereby, detrimental effects of excessive heat build-up resulting from the concentration of incoming sunlight and/or heat dissipated by artificial light sources may be mitigated.

Advantageously according to a further embodiment of the fibre illumination system, the cooling means are coupled to a thermal energy recovery system, such as a thermal solar heating system, a hot water production unit, a heat pump, a heat reservoir, and/or thermoelectric conversion elements/Seebeck cells.

In the following the invention will be explained in further detail with reference to the drawings, wherein the drawing shows schematically on
- Fig. 1: an embodiment of a fibre illumination system according to the invention,
- Fig. 2: an embodiment of a fibre illumination module according to the invention,
- Fig. 3: a collector element according to one embodiment,
- Fig. 4: a collector element according to another embodiment,
- Fig. 5: a connection unit according to one embodiment, and on
- Fig. 6: a connection unit according to another embodiment.

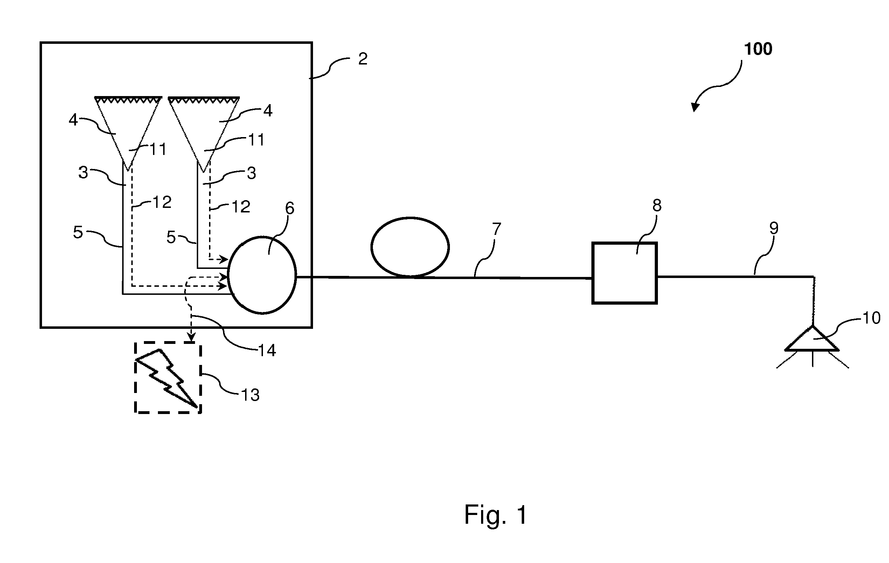

Fig. 1 shows diagrammatically a fibre illumination system 100 for illumination of interior spaces in a building. The fibre illumination system 100 comprises at least one fibre illumination module 2 with a plurality of collector elements 3, each collector element having a collection optics 4 coupled to a first end of an input fibre 5. Daylight incident on a front side of the fibre illumination module 2 is collected by the collection optics 4 and guided into the corresponding input fibre 5. The input fibres 5 are at a second end connected to a connection unit 6, where the light from the plurality of input fibres 5 is coupled into a first end of a transport fibre 7. By means of the transport fibre 7, the light is transported to the interior spaces of a building and via switching means 8 and further optical fibre 9 distributed to a point of use by means of a luminary 10. The daylight may be supplemented by artificial light sources (not shown) that are powered by electricity. Preferably, the artificial light sources are connected to the fibre illumination system 1 at connection unit 6.

In each of the collector elements 3, photovoltaic cells 11 may be arranged in a cone around the collection optics 4, so as to harvest light that is incident at angles larger than the maximum angle for coupling light into the input fibre 5, and convert the harvested light into electrical energy. The electrical energy may via electrical connections 12 and optional batteries (not shown) be supplied to the artificial light sources. Excess electrical energy may be delivered to an external electrical network 13 via connection 14, which in turn may supply electrical energy to the artificial light sources in times when the electrical power generated by the photovoltaic cells 11 is not sufficient for powering the artificial light sources.

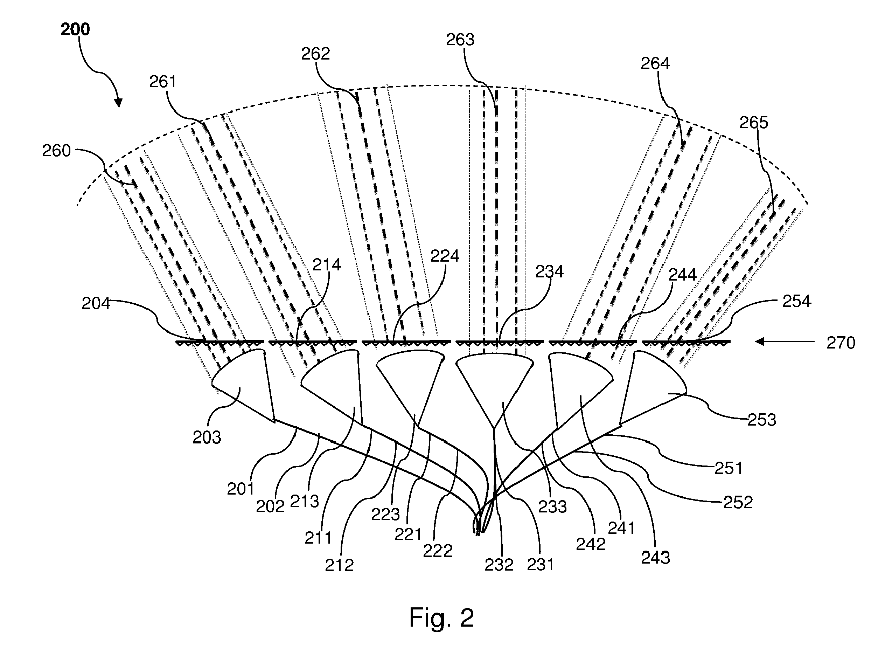

Fig. 2 shows a fibre illumination module 200 with a multi-directional arrangement of collector elements 201, 211, 221, 231, 241, 251, each collector element 201, 211, 221, 231, 241, 251 having an input fibre 202, 212, 222, 232, 242 252 and a collection optics with a respective front lens 204, 214, 224, 234, 244, 254 and coupling optics 203, 213, 223, 233, 243, 253. The collection optics of the different collector elements 201, 211, 221, 231, 241, 251 is arranged such that the principal axes for the collection of light point in different directions, here schematically shown for an angular range in one angular direction. Due to the angular spread of the collection optics, for a given direction of incidence of the incoming light 260, 261, 262, 263, 264, 265, only a fraction of the collector elements 201, 211, 221, 231, 241, 251, is active to feed daylight into the fibre illumination module 200. Under diffuse illumination conditions, such as in cloudy weather, the incoming light arrives from a large range of angles of incidence at the same time. In such a situation, essentially all collector elements 201, 211, 221, 231, 241, 251, contribute simultaneously to harvesting and feeding light into the fibre illumination module 200.

The principal direction of each of the collector elements 201, 211, 221, 231, 241, 251 is indicated by a light beam incident in the corresponding direction 260, 261, 262, 263, 264, 265. The front lenses 204, 214, 224, 234, 244, 254 are Fresnel-lenses, wherein the outward facing surface is a smooth surface and the inward facing surface is profiled. The outward facing surfaces of all lenses 204, 214, 224, 234, 244, 254 are all arranged on a prescribed surface, namely a flat common plane 270, i.e. the outward surfaces of the front lenses 204, 214, 224, 234, 244, 254 are arranged independent of the optical axes of the collector elements 201, 211, 221, 231, 241, 251 as defined by their principal directions of light collection 260, 261, 262, 263, 264, 265.

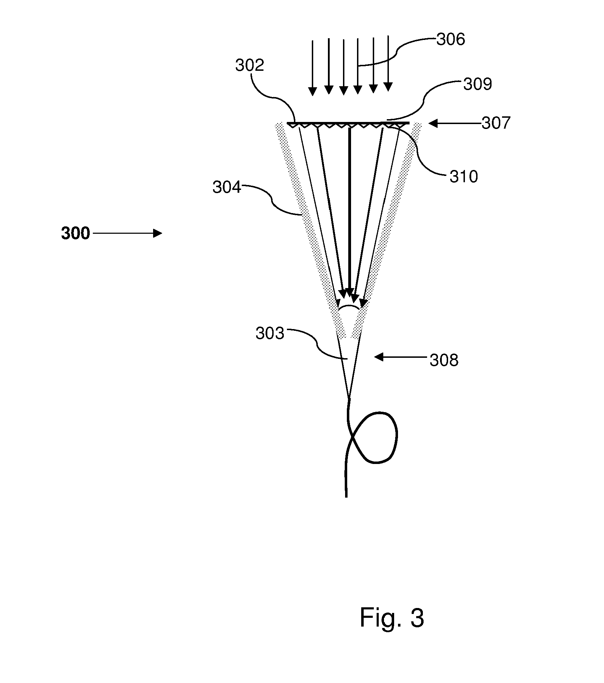

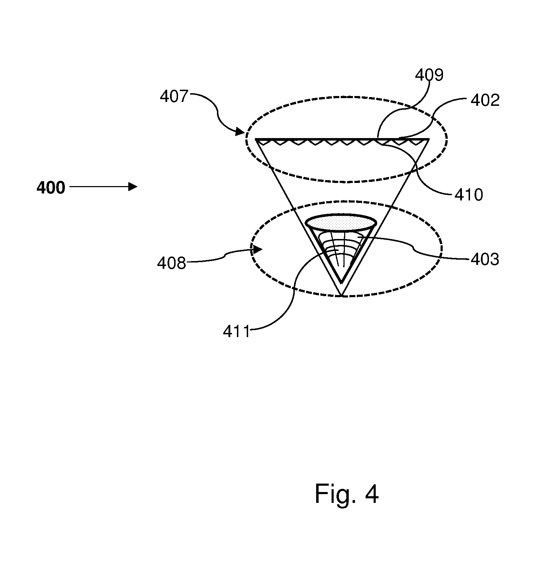

Referring to Figs. 3 and 4, a collector element 300, 400 comprises at a distal end 307, 407 of the collection optics a front lens 302, 402 with a smooth outward surface 309, 409 and a profiled inner surface 310, 410. At a proximal end 308, 408 of the collector optics, the collector element 301, 401 comprises a coupling optics 303, 403 coupled to the first end of an input fibre. As shown in Fig. 3, incoming light 306 is by means of the front lens 302 directed towards the coupling optics 303, and by means of the coupling optics 303 coupled into the first end of the input fibre. The front lens 302 may be spaced apart from the coupling optics 303 by means of a spacer structure 304. The collection optics shown in Fig. 4 further includes photovoltaic cells 411 arranged in a cone around the coupling optics 403 at the proximal end 408 of the collection optics.

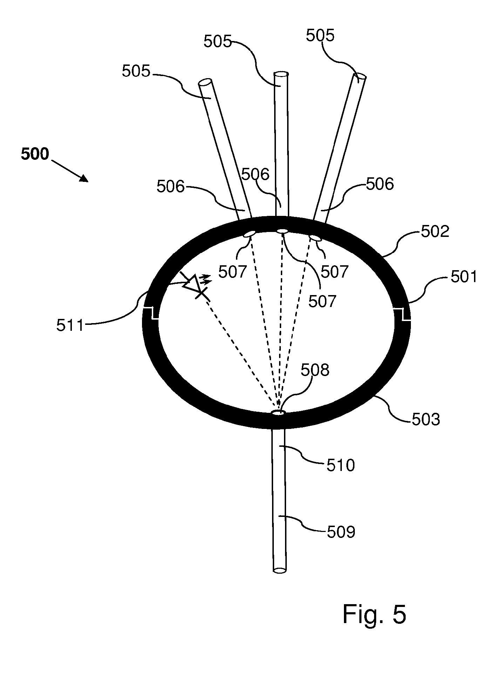

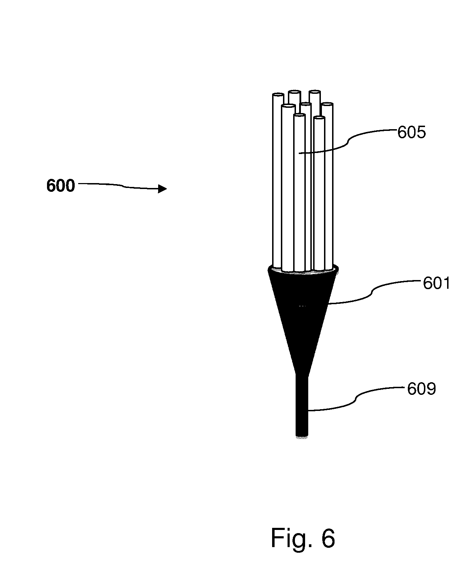

Referring to Figs. 5 and 6, two different embodiments of connection units 500, 600 for use in a fibre illumination module and/or in a fibre illumination system according to the invention are shown. The connection unit 500 of Fig. 5 comprises a closed housing 501 that may be separated into a first portion 502 and a cooperating second portion 503. The first portion 502 of housing 501 comprises connection means for optically connecting the respective second ends 506 of a plurality of input fibres 505 to the inside of housing 501. The second portion 503 of housing 501 comprises connection means for optically connecting a first end 510 of a transport fibre 509 to the inside of housing 501. The light entering the interior of housing 501 through input fibres 505 is focused by lenses 507 onto lens 508 configured to couple the light into transport fibre 509. In addition to the daylight delivered through input fibres 505, an artificial light source 511 may be included in the housing 501, wherein the artificial light source 511 is directed towards the optical port 508 for coupling the artificial light into the transport fibre 509. The artificial light source may be powered from the outside of the housing through electrical connections (not shown). Alternatively to the embodiment of Fig. 5, an artificial light source may also be arranged on the outside of housing 501 and coupled into the transport fibre 509 in the same way through an input fibre 505 as the light collected by a collector element. In another embodiment, the connection unit 600 of Fig. 6 is produced as a fused fibre coupler, where input fibres 605 are fused together in a coupling region 601 so as to optically couple the input fibres to a transport fibre 609.

## Claims

1. Fibre illumination module (2) for the collection and delivery of daylight for illumination purposes, the fibre illumination module (2) comprising a plurality of collector elements (3), each collector element (3) comprising an input fibre (5) having a first end and a second end, and a collection optics (4), the collection optics (4) being configured to receive light incident on a distal end of the collection optics (4), to transfer at least partially the incident light to a proximal end of the collection optics (4), and to couple at least partially the transferred light from the proximal end of the collection optics (4) into the first end of the input fibre (5), each collector element (3) having a principal axis for the collection of light defining an optical axis of the collector element (3), wherein the optical axes of the collector elements (3) are arranged in a radially outward pointing multi-directional arrangement.

2. Fibre illumination module (2) according to claim 1, wherein the collection optics (4) comprises a front lens at the distal end, and a coupling optics at the proximal end, the coupling optics being spaced apart from the front lens by means of a spacer structure.

3. Fibre illumination module (2) according to claim 2, wherein the front lens is a Fresnel-lens with a flat/smooth first surface and a profiled second surface, wherein the flat/smooth first surface of the Fresnel-lens is arranged to face in an outward direction.

4. Fibre illumination module (2) according to any of the previous claims, wherein the collector elements (3) are arranged such that the distal ends of the collector elements (3) follow a prescribed surface, said prescribed surface being independent of the direction of the optical axes of the collector elements (3).

5. Fibre illumination module (2) according to claim 4, wherein the prescribed surface has the shape of an arbitrary roof surface.

6. Fibre illumination module (2) according to claim 4 or claim 5, wherein the prescribed surface is flat.

7. Fibre illumination module (2) according to any of the preceding claims, wherein one or more collector elements (3) further comprise photovoltaic cells arranged around the collection optics (4) so as to receive light collected by the collection optics (4) at angles outside the angle allowing for coupling of the light into the input fibre (5).

8. Fibre illumination system (100) comprising a fibre illumination module (2) according to any of the preceding claims.

9. Fibre illumination system (100) according to claim 8, further comprising artificial light sources, such as light emitting diodes or other solid state light sources.

10. Fibre illumination system (100) according to claim 9, wherein the artificial light sources are powered by the photovoltaic cells of the fibre illumination module (2) according to claim 7, preferably via intermediate re-chargeable electrical energy storage means.

11. Fibre illumination system (100) according to claim 9 or claim 10, wherein the spectral distribution of the artificial light sources is controlled so as to provide a predetermined optical spectrum delivered at the second end of the transport fibre (7).

12. Fibre illumination system (100) according to claim 11, wherein the predetermined spectrum substantially corresponds to the spectrum of the daylight received by the collection optics (4).

13. Fibre illumination system (100) according to any of the claims 8 - 12, further comprising a transport fibre (7) having a first end and a second end, and at least one connection unit (6) configured to couple light from a plurality of input fibres (5) into the first end of the transport fibre (7) so as to transmit the light from the first end through the transport fibre (7) to the second end.

14. Fibre illumination system (100) according to claim 9 and claim 13, wherein light emitted from the artificial light sources is coupled into the transport fibre (7) at the connection unit (6), preferably by means of further input fibres (7).

15. Fibre illumination system (100) according to claim 13 or claim 14, wherein the connection unit (6) is a fused fibre coupler.
